(19) Europäisches Patentamt
European Patent Office
Office européen des brevets

(11) Publication number: **0 182 120 A2**

(12) **EUROPEAN PATENT APPLICATION**

(21) Application number: **85113335.5**

(22) Date of filing: **21.10.85**

(51) Int. Cl.[4]: **A 01 N 39/00**, A 01 N 43/40, A 01 N 43/50, A 01 N 43/88

(30) Priority: **22.10.84 JP 221427/84**
**22.10.84 JP 221429/84**
**24.10.84 JP 223148/84**
**24.10.84 JP 223149/84**
**26.10.84 JP 226177/84**
**15.11.84 JP 241083/84**

(43) Date of publication of application: **28.05.86 Bulletin 86/22**

(84) Designated Contracting States: **DE FR GB**

(71) Applicant: **SUMITOMO CHEMICAL COMPANY, LIMITED, 15 Kitahama 5-chome Higashi-ku, Osaka-shi Osaka 541 (JP)**

(72) Inventor: **Morita, Kouichi, 11-7-406, Sonehigashi-machi 2-chome, Toyonaka-shi Osaka-fu (JP)**
Inventor: **Yoshida, Ryo, 5-19, Higashiuneno Azajizoyama, Kawanishi-shi Hyogo-ken (JP)**

(74) Representative: **Vossius Vossius Tauchner Heunemann Rauh, Siebertstrasse 4 P.O. Box 86 07 67, D-8000 München 86 (DE)**

(54) **Herbicidal composition.**

(57) A herbicidal composition which comprises as the active ingredients

(a) 2-(4-chloro-5-cyclopentyloxy-carbonylmethylthio-2-fluorophenyl)-4,5,6,7-tetrahydro-2H-isoindole-1,3-dione and

(b) at least one of
2-[1-(ethoxyimino)butyl]-5-[(2-ethylthio)propyl]-3-hydroxy-2-cyclohexen-1-one (sethoxydim),
butyl 2-[4-[(5-(trifluoromethyl)-2-pyridinyl)oxy]phenoxy]-propionate (fluazifop-butyl),
3-isopropyl-1H-2,1,3-benzothiadiazin-4(3H)-one-2,2-dioxide (bentazon)
and its salts,
sodium 5-[2-chloro-4-(trifluoromethyl)phenoxy]-2-nitrobenzoate (acifluorfen),
2-[4,5-dihydro-4-methyl-4-(1-methylethyl)-5-oxo-1H-imidazol-2-yl]-3-quinolinecarboxylic acid (imazaquin
and
methyl 5-(2-chloro-4-trifluoromethylphenoxy)-2-nitroacetophenoneoxime-O-acetate (PPG-1013),
and an inert carrier or diluent. Said composition exerts an enhanced herbicidal potency.

EP 0 182 120 A2

# HERBICIDAL COMPOSITION

The present invention relates to a herbicidal composition. More particularly, it relates to a herbicidal composition comprising as the active ingredients (a) 2-(4-chloro-5-cyclopentyloxycarbonylmethylthio-2-fluorophenyl)-4,5,6,7-tetrahydro-2H-isoindole-1,3-dione (hereinafter referred to as "Compound (I)") of the formula:

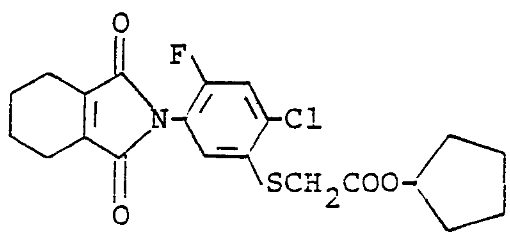

(I)

and (b) at least one of 2-[1-(ethoxyimino)butyl]-5-[(2-ethylthio)propyl]-3-hydroxy-2-cyclohexen-1-one (hereinafter referred to as "sethoxydim") of the formula:

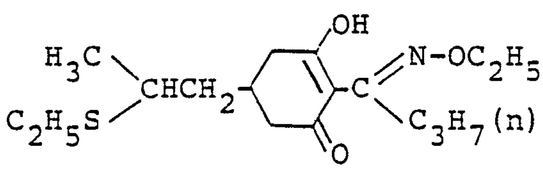

(II)

butyl 2-[4-[(5-(trifluoromethyl)-2-pyridinyl)oxy]phenoxy]-propionate (hereinafter referred to as "fluazifop-butyl") of the formula:

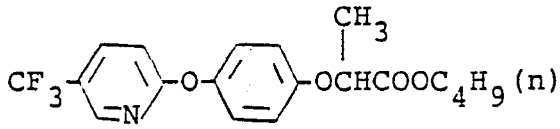

(III)

3-isopropyl-1H-2,1,3-benzothiadiazin-4(3H)-one-2,2-dioxide (hereinafter referred to as "bentazon") of the formula:

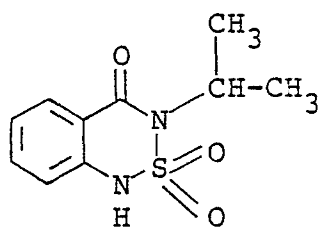 (IV)

and its salts, sodium 5-[2-chloro-4-(trifluoromethyl)-phenoxy]-2-nitrobenzoate (hereinafter referred to as "acifluorfen") of the formula:

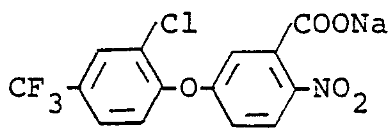 (V)

2-[4,5-dihydro-4-methyl-4-(1-methylethyl)-5-oxo-1H-imidazol-2-yl]-3-quinolinecarboxylic acid (hereinafter referred to as "imazaquin") of the formula:

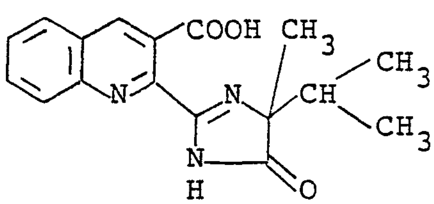 (VI)

and methyl 5-(2-chloro-4-trifluoromethylphenoxy)-2-nitro-acetophenonoxime-O-acetate (hereinafter referred to as "PPG-1013") of the formula:

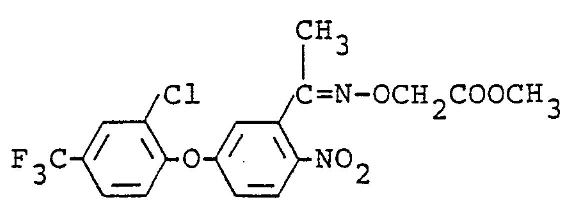 (VII)

which exerts a highly enhanced herbicidal activity against a wide variety of weeds without causing any material phytotoxicity to crop plants, particularly to peanut and soybean.

In recent years, there have been used a great

number of chemicals having herbicidal activities in order to exterminate or control the undesired vegetation of weeds. Since, however, weeds are diversified in kinds and grow over a long period of time, there is always present a demand for a new herbicidal agent having a stronger herbicidal potency with a weaker chemical injury.

As a result of the extensive study, it has now been found that the associated use of (a) Compound (I) with (b) at least one of sethoxydim, fluazifop-butyl, bentazon and its salts, acifluorfen, imazaquin and PPG-1013, these being hereinafter referred to as "Compounds (II)", produces a highly enhanced herbicidal activity against a wide variety of weeds without causing any material phytotoxicity to crop plants, particularly peanut or soybean. In comparison with the sole use of each of said active ingredients, enhancement of the herbicidal potency on such associated use is remarkable so that the active ingredients may be applied in smaller dosages. Thus, a clear and definite synergistic effect is observed in said associated use.

The herbicidal composition of the invention can exterminate or control a variety of weeds, i.e. dicotyledonous weeds such as common lambsquarters (Chenopodium album), redroot pigweed (Amaranthus retroflexus), smartweed (Polygonum sp.), common chickweed (Stellaria media), common purslane (Portulaca oleracea), common cocklebur (Xanthium strumarium), jimsonweed (Datura stramonium) and velvetleaf (Abutilon theophrasti), Ipomoea plants such as tall morningglory (Ipomoea purpurea), hemp sesbania (Sesbania

*exaltata*), prickly sida (*Sida spinosa*), black nightshade (*Solanum nigrum*) and common sunflower (*Helianthus annuus*), monocotyledonous weeds such as green foxtail (*Setaria viridis*), southern crabgrass (*Digitaria ciliaris*), goosegrass (*Eleusine indica*), barnyardgrass (*Echinochloa crus-galli*) and johnsongrass (*Sorghum halepense*), etc.

Compound (I) is known to exert a herbicidal activity [EP-A-0126419]. Compounds (II), i.e. sethoxydim [Herbicide Handbook of the Weed Science Society of America, 5th Ed., p.37 (1983)]; fluazifop-butyl [Herbicide Handbook of the Weed Science Society of America, 5th Ed., p.233 (1983)]; bentazon and its salts [Herbicide Handbook of the Weed Science Society of America, 5th Ed., p.50 (1983)]; acifluorfen [Herbicide Handbook of the Weed Science Society of America, 5th Ed., p.3 (1983)]; imazaquin [EP-A-0041623] and PPG-1013 [U.S. patent 4,344,789], are also known to have a herbicidal activity. However, the associated use of Compound (I) with any of Compounds (II) has never been attempted, and the production of said synergistic effect on such associated use has never been expected.

The proportion of Compound (I) as the component (a) and Compound(s) (II) as the component (b) in the composition of the invention may vary in a considerably broad range, usually from 1 : 0.01 to 1 : 100 by weight. When Compound (II) is sethoxydim or fluazifop-butyl, its amount may be preferably from 0.1 to 50 parts by weight, especially from 0.5 to 20 parts by weight, to one part by weight of Compound (I). When acifluorfen or imazaquin is

used as Compound (II), its amount may be favorably from 0.2 to 50 parts by weight, particularly from 0.2 to 20 parts by weight, to one part by weight of Compound (I). In case of Compound (II) being bentazon or its salt, it may be used preferably in an amount of from 1 to 100 parts by weight, especially from 3 to 50 parts by weight, to one part by weight of Compound (I). In case of Compound (II) being PPG-1013, its amount is favored to be from 0.01 to 10 parts by weight, especially from 0.05 to 5 parts by weight, to one part by weight of Compound (I).

In addition to the above active ingredients, the composition may contain a solid or liquid carrier or diluent. Any surface active or auxiliary agent may be also contained therein. Thus, the composition may be formulated in any conventional preparation form such as emulsifiable concentrate, wettable powder or suspension. The total content of the active ingredients, i.e. Compound (I) and Compound(s) (II), may be from 0.5 to 90 % by weight. When Compound(s) (II) is/are chosen from sethoxydim, fluazifop-butyl, bentazon and its salts and acifluorfen, its or their combined amount with Compound (I) is preferred to be from 0.5 to 90 %, especially from 2 to 80 % by weight. When Compound(s) (II) is/are chosen from imazaquin and PPG-1013, its or their combined amount with Compound (I) is favored to be from 0.5 to 90 % by weight, particularly from 1 to 80 % by weight.

As the solid carrier or diluent, there may be used kaolin clay, attapulgite clay, bentonite, terra alba, pyro-

phyllite, talc, diatomaceous earth, calcite, wallnut-shell powder, urea, ammonium sulfate, synthetic hydrated silica, etc. Examples of the liquid carrier or diluent are aromatic hydrocarbons (e.g. xylene, methylnaphthalene), alcohols (e.g. isopropanol, ethylene glycol, cellosolve), ketones (e.g. acetone, cyclohexanone, isophorone), vegetable oils (e.g. soybean oil, cotton-seed oil), dimethylsulfoxide, acetonitrile, water, etc.

The surface active agent used for emulsification, dispersion or spreading may be any of the anionic and nonionic type of agents. Examples of the surface active agent include alkylsulfates, alkylarylsulfonates, dialkylsulfosuccinates, phosphates of polyoxyethylenealkylaryl ethers, polyoxyethylene alkyl ethers, polyoxyethylene alkylaryl ethers, polyoxyethylene polyoxypropylene block copolymers, sorbitan fatty acid esters, polyoxyethylene sorbitan fatty acid esters, etc. Examples of the auxiliary agents include ligninsulfonates, sodium alginate, polyvinyl alcohol, gum arabic, CMC (carboxymethyl cellulose), PAP (isopropyl acid phosphate), etc.

Practical embodiments of the composition are illustratively shown in the following Formulation Examples wherein part(s) are by weight.

<u>Formulation Example 1</u>

Twenty parts of Compound (I), 30 parts of sethoxydim or fluazifop-butyl, 3 parts of calcium ligninsulfonate, 2 parts of sodium laurylsulfate and 45 parts of synthetic hydrated silicon dioxide are well mixed and

pulverized to obtain a wettable powder.

Formulation Example 2

Ten parts of Compound (I), 10 parts of bentazon (sodium salt), imazaquin or PPG-1013, 10 parts of synthetic hydrated silica, 3 parts of alkylsulfate, 2 parts of calcium ligninsulfonate and 65 parts of diatomaceous earth are well mixed and pulverized to obtain a wettable powder.

Formulation Example 3

Forty parts of Compound (I), 40 parts of acifluorfen or bentazon (sodium salt), 3 parts of calcium ligninsulfonate, 2 parts of sodium laurylsulfate and 15 parts of synthetic hydrated silica are well mixed and pulverized to obtain a wettable powder.

Formulation Example 4

Five parts of Compound (I), 15 parts of sethoxydim, 14 parts of polyoxyethylenestyryl phenyl ether, 6 parts of calcium dodecylbenzenesulfonate, 30 parts of xylene and 30 parts of isophorone are well mixed to obtain an emulsifiable concentrate.

Formulation Example 5

Four parts of Compound (I), 2 parts of bentazon, 14 parts of polyoxyethylenestyryl phenyl ether, 6 parts of calcium dodecylbenzenesulfonate, 34 parts of xylene and 40 parts of cyclohexanone are well mixed to obtain an emulsifiable concentrate.

Formulation Example 6

Five parts of Compound (I), 20 parts of fluazifop-butyl, 3 parts of polyoxyethylene sorbitan monooleate, 3

parts of CMC and 69 parts of water are mixed and pulverized until the particle size of the solid components becomes less than 5 microns to obtain a suspension.

Formulation Example 7

Five parts of Compound (I), 3 parts of polyoxyethylene sorbitan monooleate, 3 parts of CMC and 69 parts of water are well mixed and pulverized until the particle size of the solid components becomes less than 5 microns to obtain a suspension, followed by dissolving 20 parts of acifluorfen therein to obtain a suspension.

Formulation Example 8

1.5 parts of Compound (I), 0.5 part of fluazifop-butyl, 1 part of polyoxyethylene sorbitan monooleate, 5 parts of polyvinyl alcohol and 92 parts of water are well mixed and pulverized until the particle size of the solid components becomes less than 5 microns to obtain a suspension.

Formulation Example 9

0.5 part of Compound (I), 1.5 parts of acifluorfen, imazaquin or PPG-1013, 1 part of synthetic hydrated silica, 2 parts of calcium ligninsulfonate, 30 parts of bentonite and 65 parts of kaolin clay are well mixed and pulverized. The resulting powder is admixed with water and dried to obtain granules.

A composition comprising Compound (I) and Compound(s) (II) thus formulated is useful for post-emergence control of undesired weeds by foliar treatment. The foliar treatment may be effected by spraying the composition

containing Compound (I) and Compound(s) (II) over the top of plants. The direct application may also be adopted.

In order to improve the herbicidal activity, the composition may be used with other herbicides. Besides, it may be used in combination with insecticides, acaricides, nematocides, fungicides, plant growth regulators, fertilizers, soil improvers, etc.

The dosage of the active ingredients may vary depending on prevailing weather conditions, soil involved, formulation used, mixing proportion of each active ingredient, crop and weed species, etc. In general, however, the total amount of Compound (I) and Compound(s) (II) is within a range of about 0.1 to 20 grams per are. When Compound(s) (II) is/are chosen from sethoxydim, fluazifop-butyl and bentazon and its salts, said total amount is preferred to be from about 0.1 to 20 grams per are. When Compound(s) (II) is/are chosen from acifluorofen and imaxaquin, said total amount may be favorably from about 0.5 to 10 grams per are. When Compound (II) is PPG-1013, said total amount may be preferably from about 0.1 to 3 grams per are.

In case of the composition being formulated into an emulsifiable concentrate, wettable powder or suspension, it is normally diluted with water and applied over the top at a volume of about 1 to 10 liters per are to the foliage of the crop plants or weeds which germinate or have germinated. The dilution may include, in addition to the above mentioned surface active agent, any spreading or auxiliary

agent such as polyoxyethylene resin acid esters, ligninsulfonates, abietic acid, dinaphthylmethanedisulfonates, paraffin and the like.

The practical herbicidal activity of the system of the invention will be explained in further detail with reference to the following Test Examples wherein the growth controlling percentage (%) was determined by weighing the aerial parts of the test plants (fresh weight) and making calculation according to the following equation:

$$\text{Growth controlling percentage (\%)} = \left\{ 1 - \frac{\text{Fresh weight of test plant in treated plot}}{\text{Fresh weight of test plant in untreated plot}} \right\} \times 100$$

The phytotoxicity to crop plants was visually observed.

Test Example 1

Seeds of green foxtail, johnsongrass, black nightshade, velvetleaf, redroot pigweed and peanut were sowed in a concrete pot (40 x 35 $cm^2$, 35 cm (H)) filled with field soil and the test plants were grown for 15 days in outdoors. A designed amount of the composition in the form of a wettable powder formulated as in Formulation Example 1 was diluted with water containing a spreading agent and sprayed to the foliage of the test plants at a spray volume of 5 liters per are by the aid of a small hand sprayer. After 21 days' cultivation in outdoors, the growth controlling percentage was observed. The results are shown in Tables 1-A and 1-B. At the time of treatment, the test plants were in general at 1.5 to 4-leaf stage, although the growing stage varied depending on each species.

Table 1-A

| Compound No. | Dosage (g/a) | Mixing ratio | Growth controlling percentage (%) | | | | | Phyto-toxicity |
|---|---|---|---|---|---|---|---|---|
| | | | Green foxtail | Johnson-grass | Black night-shade | Velvet-leaf | Redroot pigweed | Peanut |
| Compound (I) | 2 | - | 0 | 0 | 100 | 100 | 100 | None |
| | 1 | - | 0 | 0 | 100 | 100 | 100 | None |
| | 0.5 | - | 0 | 0 | 100 | 100 | 100 | None |
| | 0.2 | - | 0 | 0 | 100 | 100 | 100 | None |
| | 0.1 | - | 0 | 0 | 90 | 90 | 90 | None |
| Sethoxy-dim | 8 | - | 100 | 100 | 0 | 0 | 0 | None |
| | 4 | - | 100 | 100 | 0 | 0 | 0 | None |
| | 2 | - | 100 | 100 | 0 | 0 | 0 | None |
| | 1 | - | 89 | 81 | 0 | 0 | 0 | None |
| | 0.5 | - | 59 | 56 | 0 | 0 | 0 | None |
| Compound (I) + Sethoxy-dim | 0.1+0.5 | 1:5 | 83 | 71 | 96 | 95 | 95 | None |
| | 0.1+1 | 1:10 | 98 | 94 | 99 | 100 | 100 | None |
| | 0.1+2 | 1:20 | 100 | 100 | 100 | 100 | 100 | None |
| | 0.1+4 | 1:40 | 100 | 100 | 100 | 100 | 100 | None |
| | 0.2+0.5 | 2:5 | 91 | 81 | 100 | 100 | 100 | None |
| | 0.2+1 | 1:5 | 100 | 100 | 100 | 100 | 100 | None |
| | 0.2+2 | 1:10 | 100 | 100 | 100 | 100 | 100 | None |
| | 0.2+4 | 1:20 | 100 | 100 | 100 | 100 | 100 | None |

(Continued)

| Compound No. | Dosage (g/a) | Mixing ratio | Growth controlling percentage (%) | | | | | Phyto-toxicity |
|---|---|---|---|---|---|---|---|---|
| | | | Green foxtail | Johnson-grass | Black night-shade | Velvet-leaf | Redroot pigweed | Peanut |
| Compound (I) + Sethoxy-dim | 0.5+0.5 | 1:1 | 100 | 96 | 100 | 100 | 100 | None |
| | 0.5+1 | 1:2 | 100 | 100 | 100 | 100 | 100 | None |
| | 0.5+2 | 1:4 | 100 | 100 | 100 | 100 | 100 | None |
| | 0.5+4 | 1:8 | 100 | 100 | 100 | 100 | 100 | None |
| | 1+0.5 | 2:1 | 100 | 100 | 100 | 100 | 100 | None |
| | 1+1 | 1:1 | 100 | 100 | 100 | 100 | 100 | None |
| | 1+2 | 1:2 | 100 | 100 | 100 | 100 | 100 | None |
| | 1+4 | 1:4 | 100 | 100 | 100 | 100 | 100 | None |
| Untreated | | | 0 | 0 | 0 | 0 | 0 | None |

Table 1-B

| Compound No. | Dosage (g/a) | Mixing ratio | Growth controlling percentage (%) | | | | | Phyto-toxicity |
|---|---|---|---|---|---|---|---|---|
| | | | Green foxtail | Johnson-grass | Black night-shade | Velvet-leaf | Redroot pigweed | Peanut |
| Compound (I) | 2 | - | 0 | 0 | 100 | 100 | 100 | None |
| | 1 | - | 0 | 0 | 100 | 100 | 100 | None |
| | 0.5 | - | 0 | 0 | 100 | 100 | 100 | None |
| | 0.2 | - | 0 | 0 | 100 | 100 | 100 | None |
| | 0.1 | - | 0 | 0 | 90 | 90 | 90 | None |
| Fluazifop-butyl | 8 | - | 100 | 100 | 0 | 0 | 0 | None |
| | 4 | - | 100 | 100 | 0 | 0 | 0 | None |
| | 2 | - | 100 | 100 | 0 | 0 | 0 | None |
| | 1 | - | 88 | 80 | 0 | 0 | 0 | None |
| | 0.5 | - | 60 | 55 | 0 | 0 | 0 | None |
| Compound (I) + Fluazifop-butyl | 0.1+0.5 | 1:5 | 82 | 70 | 95 | 95 | 95 | None |
| | 0.1+1 | 1:10 | 98 | 93 | 98 | 100 | 100 | None |
| | 0.1+2 | 1:20 | 100 | 100 | 100 | 100 | 100 | None |
| | 0.1+4 | 1:40 | 100 | 100 | 100 | 100 | 100 | None |
| | 0.2+0.5 | 2:5 | 90 | 80 | 100 | 100 | 100 | None |
| | 0.2+1 | 1:5 | 100 | 100 | 100 | 100 | 100 | None |
| | 0.2+2 | 1:10 | 100 | 100 | 100 | 100 | 100 | None |
| | 0.2+4 | 1:20 | 100 | 100 | 100 | 100 | 100 | None |

(Continued)

| Compound No. | Dosage (g/a) | Mixing ratio | Growth controlling percentage (%) | | | | | Phyto-toxicity |
|---|---|---|---|---|---|---|---|---|
| | | | Green foxtail | Johnson-grass | Black night-shade | Velvet-leaf | Redroot pigweed | Peanut |
| Compound (I) + Fluazifop-butyl | 0.5+0.5 | 1:1 | 100 | 95 | 100 | 100 | 100 | None |
| | 0.5+1 | 1:2 | 100 | 100 | 100 | 100 | 100 | None |
| | 0.5+2 | 1:4 | 100 | 100 | 100 | 100 | 100 | None |
| | 0.5+4 | 1:8 | 100 | 100 | 100 | 100 | 100 | None |
| | 1+0.5 | 2:1 | 100 | 100 | 100 | 100 | 100 | None |
| | 1+1 | 1:1 | 100 | 100 | 100 | 100 | 100 | None |
| | 1+2 | 1:2 | 100 | 100 | 100 | 100 | 100 | None |
| | 1+4 | 1:4 | 100 | 100 | 100 | 100 | 100 | None |
| Untreated | | | 0 | 0 | 0 | 0 | 0 | None |

Test Example 2

Seeds of tall morningglory, common cocklebur, black nightshade, velvetleaf, hemp sesbania, prickly sida, redroot pigweed and peanut were sowed in a concrete pot (40 x 35 $cm^2$, 35 cm (H)) filled with field soil and the test plants were grown for 18 days in outdoors. A designed amount of the composition in the form of a wettable powder formulated as in Formulation Example 1 was diluted with water containing a spreading agent and sprayed to the foliage of the test plants at a spray volume of 5 liters per are by the aid of a small hand sprayer. After 21 days' cultivation in outdoors, the growth controlling percentage was observed. The results are shown in Tables 2-A, 2-B and 2-C. At the time of treatment, the test plants were in general at the stage of germination of cotyledon to 4-leaf stage and in 1 to 18 cm height, although the growing stage varied depending on each species.

Table 2-A

| Compound No. | Dosage (g/a) | Mixing ratio | Growth controlling percentage (%) | | | | | Phyto-toxicity |
|---|---|---|---|---|---|---|---|---|
| | | | Black night-shade | Tall morning-glory | Prickly sida | Redroot pigweed | Common cocklebur | Peanut |
| Compound (I) | 2 | - | 100 | 98 | 100 | 100 | 100 | None |
| | 1 | - | 95 | 90 | 100 | 100 | 98 | None |
| | 0.5 | - | 90 | 90 | 100 | 98 | 88 | None |
| | 0.2 | - | 95 | 80 | 98 | 95 | 93 | None |
| | 0.1 | - | 88 | 65 | 93 | 93 | 90 | None |
| Bentazon | 20 | - | 50 | 40 | 100 | 85 | 100 | None |
| | 10 | - | 20 | 0 | 90 | 85 | 98 | None |
| | 5 | - | 10 | 0 | 65 | 83 | 90 | None |
| | 2 | - | 0 | 0 | 10 | 50 | 75 | None |
| | 1 | - | 0 | 0 | 0 | 20 | 50 | None |
| Compound (I) + Bentazon | 0.1+1 | 1:10 | 100 | 70 | 100 | 100 | 100 | None |
| | 0.1+2 | 1:20 | 100 | 88 | 100 | 100 | 100 | None |
| | 0.1+5 | 1:50 | 100 | 100 | 100 | 100 | 100 | None |
| | 0.1+10 | 1:10 | 100 | 100 | 100 | 100 | 100 | None |
| | 0.2+1 | 1:5 | 100 | 100 | 100 | 100 | 100 | None |
| | 0.2+2 | 1:10 | 100 | 100 | 100 | 100 | 100 | None |
| | 0.2+5 | 1:25 | 100 | 100 | 100 | 100 | 100 | None |
| | 0.2+10 | 1:50 | 100 | 100 | 100 | 100 | 100 | None |
| | 0.5+1 | 1:2 | 100 | 100 | 100 | 100 | 100 | None |
| | 0.5+2 | 1:4 | 100 | 100 | 100 | 100 | 100 | None |
| | 0.5+5 | 1:10 | 100 | 100 | 100 | 100 | 100 | None |
| | 0.5+10 | 1:20 | 100 | 100 | 100 | 100 | 100 | None |

(Continued)

| Compound No. | Dosage (g/a) | Mixing ratio | Growth controlling percentage (%) | | | | | Phyto-toxicity |
|---|---|---|---|---|---|---|---|---|
| | | | Black night-shade | Tall morning-glory | Prickly sida | Redroot pigweed | Common cocklebur | Peanut |
| Compound (I) + Bentazon | 1+1 | 1:1 | 100 | 100 | 100 | 100 | 100 | None |
| | 1+2 | 1:2 | 100 | 100 | 100 | 100 | 100 | None |
| | 1+5 | 1:5 | 100 | 100 | 100 | 100 | 100 | None |
| | 1+10 | 1:10 | 100 | 100 | 100 | 100 | 100 | None |
| Untreated | | | 0 | 0 | 0 | 0 | 0 | None |

Table 2-B

| Compound No. | Dosage (g/a) | Mixing ratio | Growth controlling percentage (%) | | | | | Phyto-toxicity |
|---|---|---|---|---|---|---|---|---|
| | | | Common cocklebur | Velvet-leaf | Tall morning-glory | Prickly sida | Green foxtail | Peanut |
| Compound (I) | 2 | - | 100 | 98 | 98 | 100 | 100 | None |
| | 1 | - | 98 | 90 | 90 | 100 | 95 | None |
| | 0.5 | - | 88 | 90 | 90 | 100 | 90 | None |
| | 0.2 | - | 93 | 88 | 80 | 98 | 95 | None |
| | 0.1 | - | 90 | 65 | 65 | 93 | 88 | None |
| Aci-fluorfen | 12 | - | 88 | 85 | 95 | 88 | 93 | None |
| | 6 | - | 75 | 73 | 85 | 95 | 67 | None |
| | 3 | - | 70 | 60 | 60 | 40 | 95 | None |
| | 1.5 | - | 65 | 20 | 40 | 10 | 90 | None |
| | 0.7 | - | 40 | 0 | 10 | 0 | 80 | None |
| Compound (I) + Aci-fluorfen | 0.1+0.7 | 1:7 | 100 | 70 | 88 | 98 | 100 | None |
| | 0.1+1.5 | 1:15 | 100 | 91 | 99 | 100 | 100 | None |
| | 0.1+3 | 1:30 | 100 | 100 | 100 | 100 | 100 | None |
| | 0.1+6 | 1:60 | 100 | 100 | 100 | 100 | 100 | None |
| | 0.2+0.7 | 2:7 | 100 | 100 | 100 | 100 | 100 | None |
| | 0.2+1.5 | 2:15 | 100 | 100 | 100 | 100 | 100 | None |
| | 0.2+3 | 1:15 | 100 | 100 | 100 | 100 | 100 | None |
| | 0.2+6 | 1:30 | 100 | 100 | 100 | 100 | 100 | None |

(Continued)

| Compound No. | Dosage (g/a) | Mixing ratio | Growth controlling percentage (%) | | | | | Phyto-toxicity |
|---|---|---|---|---|---|---|---|---|
| | | | Common cocklebur | Velvet-leaf | Tall morning-glory | Prickly sida | Green foxtail | Peanut |
| Compound (I) + Aci-fluorfen | 0.5+0.7 | 5:7 | 100 | 100 | 100 | 100 | 100 | None |
| | 0.5+1.5 | 1:3 | 100 | 100 | 100 | 100 | 100 | None |
| | 0.5+3 | 1:6 | 100 | 100 | 100 | 100 | 100 | None |
| | 0.5+6 | 1:12 | 100 | 100 | 100 | 100 | 100 | None |
| | 1+0.7 | 10:7 | 100 | 100 | 100 | 100 | 100 | None |
| | 1+1.5 | 2:3 | 100 | 100 | 100 | 100 | 100 | None |
| | 1+3 | 1:3 | 100 | 100 | 100 | 100 | 100 | None |
| | 1+6 | 1:6 | 100 | 100 | 100 | 100 | 100 | None |
| Untreated | | | 0 | 0 | 0 | 0 | 0 | None |

Table 2-C

| Compound No. | Dosage (g/a) | Mixing ratio | Growth controlling percentage (%) | | | | | Phyto-toxicity |
|---|---|---|---|---|---|---|---|---|
| | | | Velve-leaf | Prickly sida | Tall morning-glory | Redroot pigweed | Common cocklebur | Peanut |
| Compound (I) | 2 | - | 100 | 100 | 98 | 100 | 100 | None |
| | 1 | - | 100 | 100 | 90 | 100 | 100 | None |
| | 0.5 | - | 100 | 93 | 90 | 100 | 98 | None |
| | 0.2 | - | 98 | 88 | 80 | 100 | 80 | None |
| | 0.1 | - | 90 | 85 | 65 | 98 | 70 | None |
| PPG-1013 | 0.8 | - | 100 | 100 | 100 | 100 | 100 | Observed |
| | 0.4 | - | 100 | 92 | 95 | 90 | 100 | None |
| | 0.2 | - | 93 | 60 | 60 | 90 | 80 | None |
| | 0.1 | - | 60 | 33 | 30 | 50 | 53 | None |
| | 0.05 | - | 20 | 10 | 9 | 18 | 19 | None |
| Compound (I) + PPG-1013 | 0.1+0.05 | 2:1 | 100 | 100 | 90 | 100 | 95 | None |
| | 0.1+0.1 | 1:1 | 100 | 100 | 100 | 100 | 100 | None |
| | 0.1+0.2 | 1:2 | 100 | 100 | 100 | 100 | 100 | None |
| | 0.1+0.4 | 1:4 | 100 | 100 | 100 | 100 | 100 | None |
| | 0.2+0.05 | 4:1 | 100 | 100 | 100 | 100 | 100 | None |
| | 0.2+0.1 | 2:1 | 100 | 100 | 100 | 100 | 100 | None |
| | 0.2+0.2 | 1:1 | 100 | 100 | 100 | 100 | 100 | None |
| | 0.2+0.4 | 1:2 | 100 | 100 | 100 | 100 | 100 | None |
| | 0.5+0.05 | 10:1 | 100 | 100 | 100 | 100 | 100 | None |
| | 0.5+0.1 | 5:1 | 100 | 100 | 100 | 100 | 100 | None |
| | 0.5+0.2 | 5:2 | 100 | 100 | 100 | 100 | 100 | None |
| | 0.5+0.4 | 5:4 | 100 | 100 | 100 | 100 | 100 | None |

(Continued)

| Compound No. | Dosage (g/a) | Mixing ratio | Growth controlling percentage (%) | | | | | Phyto-toxicity |
|---|---|---|---|---|---|---|---|---|
| | | | Velve-leaf | Prickly sida | Tall morning-glory | Redroot pigweed | Common cocklebur | Peanut |
| Compound (I) + PPG-1013 | 1+0.05<br>1+0.1<br>1+0.2<br>1+0.4 | 20:1<br>10:1<br>5:1<br>5:2 | 100<br>100<br>100<br>100 | 100<br>100<br>100<br>100 | 100<br>100<br>100<br>100 | 100<br>100<br>100<br>100 | 100<br>100<br>100<br>100 | None<br>None<br>None<br>None |
| Untreated | | | 0 | 0 | 0 | 0 | 0 | None |

Test Example 4

Seeds of tall morningglory, velvetleaf, common cocklebur, redroot pigweed, black nightshade and peanut were sowed in a concrete pot (40 x 35 $cm^2$, 35 cm (H)) filled with field soil and the test plants were grown for 22 days in outdoors. A designed amount of the composition in the form of a wettable powder formulated as in Formulation Example 1 was diluted with water containing a spreading agent and sprayed to the foliage of the test plants at a spray volume of 5 liters per are by the aid of a small hand sprayer. After 20 days' cultivation in outdoors, the growth controlling percentage was observed. The results are shown in Table 3. At the time of treatment, the test plants were in general at 1 to 5-leaf stage and in 2 to 13 cm height, although the growing stage varied depending on each species.

Table 3

| Compound No. | Dosage (g/a) | Mixing ratio | Growth controlling percentage (%) | | | | | Phyto-toxicity |
|---|---|---|---|---|---|---|---|---|
| | | | Tall morning-glory | Velvet-leaf | Common cocklebur | Redroot pigweed | Black night-shade | Peanut |
| Compound (I) | 2 | - | 100 | 100 | 100 | 100 | 100 | None |
| | 1 | - | 100 | 100 | 95 | 95 | 95 | None |
| | 0.5 | - | 90 | 100 | 80 | 85 | 90 | None |
| | 0.2 | - | 80 | 95 | 60 | 70 | 85 | None |
| | 0.1 | - | 70 | 80 | 50 | 60 | 75 | None |
| Imazaquin | 4 | - | 67 | 3 | 95 | 100 | 85 | None |
| | 2 | - | 60 | 1 | 90 | 80 | 65 | None |
| | 1 | - | 45 | 0 | 90 | 65 | 40 | None |
| | 0.5 | - | 40 | 0 | 78 | 38 | 20 | None |
| | 0.2 | - | 30 | 0 | 65 | 10 | 10 | None |
| Compound (I) + Imazaquin | 0.1+0.2 | 1:2 | 80 | 100 | 85 | 90 | 90 | None |
| | 0.1+0.5 | 1:5 | 88 | 100 | 90 | 95 | 95 | None |
| | 0.1+1 | 1:10 | 95 | 100 | 95 | 98 | 98 | None |
| | 0.1+2 | 1:20 | 100 | 100 | 100 | 100 | 100 | None |
| | 0.2+0.2 | 1:1 | 95 | 100 | 98 | 99 | 95 | None |
| | 0.2+0.5 | 2:5 | 95 | 100 | 100 | 100 | 98 | None |
| | 0.2+1 | 1:5 | 99 | 100 | 100 | 100 | 98 | None |
| | 0.2+2 | 1:10 | 100 | 100 | 100 | 100 | 100 | None |
| | 0.5+0.2 | 5:2 | 100 | 100 | 100 | 100 | 100 | None |
| | 0.5+1 | 1:1 | 100 | 100 | 100 | 100 | 100 | None |
| | 0.5+2 | 1:2 | 100 | 100 | 100 | 100 | 100 | None |
| | 0.5+4 | 1:4 | 100 | 100 | 100 | 100 | 100 | None |

(Continued)

| Compound No. | Dosage (g/a) | Mixing ratio | Growth controlling percentage (%) | | | | | Phyto-toxicity |
|---|---|---|---|---|---|---|---|---|
| | | | Tall morning-glory | Velvet-leaf | Common cocklebur | Redroot pigweed | Black night-shade | Peanut |
| Compound (I) + Imazaquin | 1+0.2<br>1+0.5<br>1+1<br>1+2 | 5:1<br>2:1<br>1:1<br>1:2 | 100<br>100<br>100<br>100 | 100<br>100<br>100<br>100 | 100<br>100<br>100<br>100 | 100<br>100<br>100<br>100 | 100<br>100<br>100<br>100 | None<br>None<br>None<br>None |
| Untreated | | | 0 | 0 | 0 | 0 | 0 | None |

Test Example 5

Seeds of green foxtail, jonhsongrass, redroot pigweed, velvetleaf and soybean were sowed in a concrete pot (40 x 35 $cm^2$, 35 cm (H)) filled with field soil and the test plants were grown for 15 days in outdoors. A designed amount of the composition in the form of a wettable powder formulated as in Formulation Example 1 was diluted with water containing a spreading agent and sprayed to the foliage of the test plants at a spray volume of 5 liters per are by the aid of a small hand sprayer. After 20 days' cultivation in outdoors, the growth controlling percentage was observed. The results are shown in Tables 4-A and 4-B. At the time of treatment, the test plants were in general at 1 to 3-leaf stage, although the growing stage varied depending on each species.

Table 4-A

| Compound No. | Dosage (g/a) | Mixing ratio | Growth controlling percentage (%) | | | Phyto-toxicity |
|---|---|---|---|---|---|---|
| | | | Green fox-tail | Redroot pigweed | Velvet-leaf | Soybean |
| Compound (I) | 0.5 | - | 0 | 100 | 100 | None |
| | 0.1 | - | 0 | 100 | 100 | None |
| | 0.1 | - | 0 | 93 | 95 | None |
| Sethoxydim | 2 | - | 100 | 0 | 0 | None |
| | 1 | - | 90 | 0 | 0 | None |
| | 0.5 | - | 65 | 0 | 0 | None |
| Compound (I) + Sethoxydim | 0.1+0.5 | 1:5 | 88 | 97 | 99 | None |
| | 0.1+1 | 1:10 | 100 | 100 | 100 | None |
| | 0.1+2 | 1:20 | 100 | 100 | 100 | None |
| | 0.2+0.5 | 2:5 | 95 | 100 | 100 | None |
| | 0.2+1 | 1:5 | 100 | 100 | 100 | None |
| | 0.2+2 | 1:10 | 100 | 100 | 100 | None |
| | 0.5+0.5 | 1:1 | 100 | 100 | 100 | None |
| | 0.5+1 | 1:2 | 100 | 100 | 100 | None |
| | 0.5+2 | 1:4 | 100 | 100 | 100 | None |
| Untreated | | | 0 | 0 | 0 | None |

Table 4-B

| Compound No. | Dosage (g/a) | Mixing ratio | Growth controlling percentage (%) | | | Phyto-toxicity |
|---|---|---|---|---|---|---|
| | | | Johnson-grass | Redroot pigweed | Velvet-leaf | Soybean |
| Compound (I) | 0.5<br>0.1<br>0.1 | -<br>-<br>- | 0<br>0<br>0 | 100<br>100<br>93 | 100<br>100<br>95 | None<br>None<br>None |
| Fluazifop-butyl | 2<br>1<br>0.5 | -<br>-<br>- | 100<br>85<br>60 | 0<br>0<br>0 | 0<br>0<br>0 | None<br>None<br>None |
| Compound (I) + Fluazifop-butyl | 0.1+0.5<br>0.1+1<br>0.1+2 | 1:5<br>1:10<br>1:20 | 78<br>97<br>100 | 97<br>100<br>100 | 99<br>100<br>100 | None<br>None<br>None |
| | 0.2+0.5<br>0.2+1<br>0.2+2 | 2:5<br>1:5<br>1:10 | 90<br>100<br>100 | 100<br>100<br>100 | 100<br>100<br>100 | None<br>None<br>None |
| | 0.5+0.5<br>0.5+1<br>0.5+2 | 1:1<br>1:2<br>1:4 | 99<br>100<br>100 | 100<br>100<br>100 | 100<br>100<br>100 | None<br>None<br>None |
| Untreated | | | 0 | 0 | 0 | None |

Test Example 6

Seeds of redroot pigweed, common lambsquarters, prickly sida, velvetleaf, tall morningglory, green foxtail and soybean were sowed in a concrete pot (40 x 35 $cm^2$, 35 cm (H)) filled with field soil and the test plants were grown for 22 days in outdoors. A designed amount of the composition in the form of a wettable powder formulated as in Formulation Example 1 was diluted with water containing a spreading agent and sprayed to the foliage of the test plants at a spray volume of 5 liters per are by the aid of a small hand sprayer. After 20 days' cultivation in outdoors, the growth controlling percentage was observed. The results are shown in Tables 5-A, 5-B, 5-C and 5-D. At the time of treatment, the test plants were in general at 1 to 5-leaf stage and in 2 to 13 cm height, although the growing stage varied depending on each species.

Table 5-A

| Compound No. | Dosage (g/a) | Mixing ratio | Growth controlling percentage (%) | | | Phyto-toxicity |
|---|---|---|---|---|---|---|
| | | | Velvet-leaf | Prickly sida | Tall morning-glory | Soybean |
| Compound (I) | 0.9 | - | 100 | 95 | 95 | None |
| | 0.3 | - | 100 | 80 | 80 | None |
| | 0.1 | - | 90 | 70 | 65 | None |
| Bentazon | 9 | - | 90 | 80 | 50 | None |
| | 3 | - | 53 | 30 | 10 | None |
| | 1 | - | 3 | 0 | 0 | None |
| Compound (I) + Bentazon | 0.1+1 | 1:10 | 100 | 95 | 70 | None |
| | 0.1+3 | 1:30 | 100 | 100 | 90 | None |
| | 0.1+9 | 1:90 | 100 | 100 | 100 | None |
| | 0.3+1 | 3:10 | 100 | 100 | 100 | None |
| | 0.3+3 | 1:10 | 100 | 100 | 100 | None |
| | 0.3+9 | 1:30 | 100 | 100 | 100 | None |
| | 0.9+1 | 9:10 | 100 | 100 | 100 | None |
| | 0.9+3 | 3:10 | 100 | 100 | 100 | None |
| | 0.9+9 | 1:10 | 100 | 100 | 100 | None |
| Untreated | | | 0 | 0 | 0 | None |

Table 5-B

| Compound No. | Dosage (g/a) | Mixing ratio | Growth controlling percentage (%) | | | | Phyto-toxicity |
|---|---|---|---|---|---|---|---|
| | | | Redroot pigweed | Common lambs-quarters | Prickly sida | Velvet-leaf | Soybean |
| Compound (I) | 0.9 | - | 100 | 90 | 95 | 100 | None |
| | 0.3 | - | 85 | 80 | 80 | 100 | None |
| | 0.1 | - | 70 | 70 | 70 | 90 | None |
| Aci-fluorfen | 2.7 | - | 90 | 80 | 40 | 60 | None |
| | 0.9 | - | 70 | 43 | 10 | 10 | None |
| | 0.3 | - | 30 | 20 | 0 | 0 | None |
| Compound (I) + Aci-fluorfen | 0.1+0.3 | 1:3 | 100 | 100 | 88 | 100 | None |
| | 0.1+0.9 | 1:9 | 100 | 100 | 95 | 100 | None |
| | 0.1+2.7 | 1:27 | 100 | 100 | 100 | 100 | None |
| | 0.3+0.3 | 1:1 | 100 | 100 | 98 | 100 | None |
| | 0.3+0.9 | 1:3 | 100 | 100 | 100 | 100 | None |
| | 0.3+2.7 | 1:9 | 100 | 100 | 100 | 100 | None |
| | 0.9+0.3 | 3:1 | 100 | 100 | 100 | 100 | None |
| | 0.9+0.9 | 1:1 | 100 | 100 | 100 | 100 | None |
| | 0.9+2.7 | 1:3 | 100 | 100 | 100 | 100 | None |
| Untreated | | | 0 | 0 | 0 | 0 | None |

Table 5-C

| Compound No. | Dosage (g/a) | Mixing ratio | Growth controlling percentage (%) | | | Phyto-toxicity |
|---|---|---|---|---|---|---|
| | | | Redroot pigweed | Prickly sida | Black night-shade | Soybean |
| Compound (I) | 0.9 | - | 100 | 95 | 100 | None |
| | 0.3 | - | 85 | 80 | 90 | None |
| | 0.1 | - | 70 | 70 | 80 | None |
| Imazaquin | 1.8 | - | 85 | 10 | 65 | None |
| | 0.6 | - | 64 | 3 | 35 | None |
| | 0.2 | - | 15 | 0 | 3 | None |
| Compound (I) + Imazaquin | 0.1+0.2 | 1:2 | 90 | 85 | 90 | None |
| | 0.1+0.6 | 1:6 | 100 | 95 | 100 | None |
| | 0.1:1.8 | 1:18 | 100 | 100 | 100 | None |
| | 0.3+0.2 | 3:2 | 100 | 90 | 98 | None |
| | 0.3+0.6 | 1:2 | 100 | 95 | 100 | None |
| | 0.3+1.8 | 1:6 | 100 | 100 | 100 | None |
| | 0.9+0.2 | 9:2 | 100 | 100 | 100 | None |
| | 0.9+0.6 | 3:2 | 100 | 100 | 100 | None |
| | 0.9+1.8 | 1:2 | 100 | 100 | 100 | None |
| Untreated | | | 0 | 0 | 0 | None |

Table 5-D

| Compound No. | Dosage (g/a) | Mixing ratio | Growth controlling percentage (%) | | | Phyto-toxicity |
|---|---|---|---|---|---|---|
| | | | Redroot pigweed | Black night-shade | Prickly sida | Soybean |
| Compound (I) | 0.9 | - | 100 | 100 | 95 | None |
| | 0.3 | - | 85 | 90 | 80 | None |
| | 0.1 | - | 70 | 80 | 70 | None |
| PPG-1013 | 0.3 | - | 100 | 95 | 90 | None |
| | 0.1 | - | 60 | 70 | 50 | None |
| | 0.03 | - | 20 | 45 | 20 | None |
| Compound (I) + PPG-1013 | 0.1+0.03 | 10:3 | 100 | 100 | 100 | None |
| | 0.1+0.1 | 1:1 | 100 | 100 | 100 | None |
| | 0.1+0.3 | 1:3 | 100 | 100 | 100 | None |
| | 0.3+0.03 | 10:1 | 100 | 100 | 100 | None |
| | 0.3+0.1 | 3:1 | 100 | 100 | 100 | None |
| | 0.3+0.3 | 1:1 | 100 | 100 | 100 | None |
| | 0.9+0.03 | 30:1 | 100 | 100 | 100 | None |
| | 0.9+0.1 | 9:1 | 100 | 100 | 100 | None |
| | 0.9+0.3 | 3:1 | 100 | 100 | 100 | None |
| Untreated | | | 0 | 0 | 0 | None |

Test Example 7

Seeds of tall morningglory, common cocklebur, common lambsquarters, velvetleaf, wild sunflower and soybean were sowed in a vat (33 x 23 $cm^2$, 11 cm (H)) filled with field soil and the test plants were grown for 18 days in outdoors. A designed amount of the composition in the form of a wettable powder formulated as in Formulation Example 1 was diluted with water containing a spreading agent and sprayed to the foliage of the test plants at a spray volume of 5 liters per are by the aid of a small hand sprayer. After 20 days' cultivation in outdoors, the growth controlling percentage was observed. The results are shown in Table 6. At the time of treatment, the test plants were in general at 1 to 4-leaf stage and in 3 to 15 cm height, although the growing stage varied depending on each species.

Table 6

| Compound No. | Dosage (g/a) | Mixing ratio | Growth controlling percentage (%) | | | | | Phyto-toxicity |
|---|---|---|---|---|---|---|---|---|
| | | | Tall morning-glory | Velvet-leaf | Common cocklebur | Common lambs-quarters | Wild sun-flower | Soybean |
| Compound (I) | 0.5<br>0.25 | -<br>- | 83<br>80 | 100<br>98 | 95<br>85 | 100<br>93 | 95<br>80 | None<br>None |
| Imazaquin | 1<br>0.5 | -<br>- | 55<br>43 | 45<br>30 | 85<br>70 | 75<br>70 | 73<br>60 | None<br>None |
| Compound (I) + Imazaquin | 0.25+0.5<br>0.25+1 | 1:2<br>1:4 | 100<br>100 | 100<br>100 | 100<br>100 | 100<br>100 | 100<br>100 | None<br>None |
| | 0.5+0.5<br>0.5+1 | 1:1<br>1:2 | 100<br>100 | 100<br>100 | 100<br>100 | 100<br>100 | 100<br>100 | None<br>None |

What is claimed is:

1. A herbicidal composition which comprises as the active ingredients (a) 2-(4-chloro-5-cyclopentyloxy-carbonylmethylthio-2-fluorophenyl)-4,5,6,7-tetrahydro-2H-isoindole-1,3-dione and (b) at least one of 2-[1-(ethoxy-imino)butyl]-5-[(2-ethylthio)propyl]-3-hydroxy-2-cyclo-hexen-1-one (sethoxydim), butyl 2-[4-[(5-(trifluoromethyl)-2-pyridinyl)oxy]phenoxy]propionate (fluazifop-butyl), 3-isopropyl-1H-2,1,3-benzothiadiazin-4(3H)-one-2,2-dioxide (bentazon) and its salts, sodium 5-[2-chloro-4-(trifluoromethyl)phenoxy]-2-nitrobenzoate (acifluorfen), 2-[4,5-di-hydro-4-methyl-4-(1-methylethyl)-5-oxo-1H-imidazol-2-yl]-3-quinolinecarboxylic acid (imazaquin) and methyl 5-(2-chloro-4-trifluoromethylphenoxy)-2-nitroacetophenoneoxime-O-acetate (PPG-1013), and an inert carrier or diluent.

2. The composition according to claim 1, wherein the weight proportion of the components (a) and (b) is from 1 : 0.01 to 1 : 100.

3. The composition according to claim 2, wherein the component (b) is chosen from sethoxydim and fluazifop-butyl, and the weight proportion of the components (a) and (b) is from 1 : 0.1 to 1 : 50.

4. The composition according to claim 2, wherein the component (b) is chosen from acifluorfen and imazaquin, and the weight proportion of the components (a) and (b) is

from 1 : 0.2 to 1 : 50.

5. The composition according to claim 2, wherein the component (b) is bentazon, and the weight proportion of the components (a) and (b) is from 1 : 1 to 1 : 100.

6. The composition according to claim 2, wherein the component (b) is PPG-1013, and the weight proportion of the components (a) and (b) is from 1 : 0.01 to 1 : 10.

7. A method for controlling weeds which comprises applying a herbicidally effective amount of the composition according to claim 1 to the weeds.

8. The method according to claim 7, wherein the weeds are those germinated in the field of peanut or soybean.

9. The method according to claim 7, wherein the total amount of the components (a) and (b) is from 0.1 to 20 grams per are.

10. The method according to claim 9, wherein the component (b) is chosen from sethoxydim, fluazifop-butyl and bentazon and its salts, and said total amount is from 0.1 to 20 grams per are.

11. The method according to claim 9, wherein the

component (b) is chosen from acifluorfen and imazaquin, and said total amount is from 0.5 to 10 grams per are.

12. The method according to claim 9, wherein the component (b) is PPG-1013, and said total amount is from 0.1 to 3 grams per are.